# FASCICULE DE BREVET EUROPEEN

(11) **EP 2 265 688 B1**
(45) Date de publication et mention de la délivrance du brevet: **20.05.2015**
(21) Numéro de dépôt: 09736006.9
(22) Date de dépôt: 17.04.2009
(51) Int. Cl.: C09K 8/584

(54) **COMPOSITION VISCOELASTIQUE A STABILITE AMELIOREE**
VISKOELASTISCHE ZUSAMMENSETZUNG MIT ERHÖHTER STABILITÄT
VISCOELASTIC COMPOSITION WITH IMPROVED STABILITY

(30) Priorité: 22.04.2008 FR 0802237
(43) Date de publication de la demande: 29.12.2010
(73) Titulaire: Rhodia Opérations, 93306 Aubervilliers (FR)
(72) Inventeur: MORVAN, Mikel, F-33600 Pessac (FR); DEGRE, Guillaume, F-33400 Talence (FR)
(74) Mandataire: Cordier, Pascal Christian
(86) Numéro de dépôt international: PCT/EP2009/054618
(87) Numéro de publication internationale: WO 2009/130170

(56) Documents cités:
- WO-A-98/56497
- US-A1- 2002 002 205
- US-A1- 2007 107 897

## Description

L'invention concerne une composition viscoélastique à stabilité améliorée.

La présente invention concerne l'utilisation de fluides viscoélastiques dans la technique de récupération assistée du pétrole brut présent dans des formations souterraines. Ces fluides sont obtenus par addition/dissolution d'un tensio-actif zwitterionique viscosant conférant aux dits fluides des propriétés viscoélastiques. L'invention concerne aussi des formulations utilisables pour des méthodes de récupération assistée du pétrole.

Dans le cadre de la production de pétrole brut, ou huile, des formations souterraines, il existe différentes méthodes pour optimiser l'extraction d'huile originale en place, en anglais OOIP pour « original oil in place ».

La méthode de production primaire de pétrole brut consiste, une fois le puits foré, à récupérer le pétrole brut par migration du pétrole de la formation de roche ou du sable, vers un puits de plus basse pression, puis le pomper vers la surface, via un puits « producteur ». La production primaire est de ce fait la méthode la moins chère d'extraction. On récupère typiquement seulement 10 à 15 % d'OOIP. Néanmoins, au fur et à mesure que le pétrole est pompé, la pression diminue et l'extraction devient plus difficile.

Des méthodes secondaires de production sont alors employées quand la pression souterraine devient insuffisante pour déplacer le pétrole restant. La technique la plus commune, l'inondation (waterflooding) utilise des puits d'injecteurs qui poussent un fluide pousseur constitué de grands volumes de d'eau sous pression dans la zone contenant le pétrole. Lors de sa migration de la zone vers un ou plusieurs puits producteur(s), l'eau injectée entraîne une partie du pétrole qu'elle rencontre. A la surface, le pétrole est séparé de l'eau injectée. L'inondation permet de récupérer 10 à 30 % additionnel d'OOIP.

Quand l'inondation (waterflooding) atteint le point où la production n'est plus rentable, une décision doit être prise: le changement de champ de pétrole, ou le recours à une autre phase d'exploitation. On peut alors utiliser une technique de récupération assistée utilisant l'inondation dans laquelle l'eau comprend des agents tensio-actifs et/ou des polymères. Ces polymères sont utilisés pour augmenter la viscosité du fluide pousseur et améliorer ainsi le balayage du pétrole par le fluide pousseur. Il est par exemple connu d' d'augmenter la viscosité de l'eau au moyen d'agents viscosants comme des polyacrylamides partiellement hydrolysés de haut poids moléculaire. Cependant ces polymères acryliques présentent une stabilité insuffisante quand le fluide pousseur présente une certaine quantité d'ions divalents comme c'est le cas dans l'eau de mer par exemple et/ou des températures d'utilisation supérieures à 80/100°C.

Ces tensio-actifs, dispersables et/ou solubles dans l'eau, au contact avec le pétrole contenu dans la roche ou le sable, abaissent la tension inter faciale eau/huile, pour permettre d'entraîner l'huile piégée dans les rétrécissements des pores du réservoir.

Il est ainsi connu d'injecter un fluide pousseur qui permette à la fois de réduire la tension inter faciale eau-huile en dessous de 1 mN/m et de maintenir, dans les conditions de température et de salinité du réservoir, une viscosité de 10 cps à un cisaillement de 10 s⁻¹ pour une concentration en tensio-actif inférieure à 1% poids comme décrit dans les brevets des Etats-Unis d'Amérique US2007/0107897 et US2007/0142235.

Les tensio-actifs zwitterioniques et notamment les bétaines sont préférablement utilisés du fait de leur stabilité dans des saumures. Le terme zwitterionique décrit des tensio-actifs ayant une charge positive permanente indépendamment du pH et ayant une charge négative au-delà d'un certain pH. Toutefois ces tensio-actifs peuvent se dégrader au cours de leur utilisation à des températures supérieures à 80/100°C dans les réservoirs salins de pétrole et le fluide pousseur peut alors subir une perte de son pouvoir viscosant.

Il existe donc toujours un besoin pour des compositions viscoélastiques présentant des propriétés modifiées et améliorées, notamment:
une bonne stabilité à force ionique relativement élevée, dans un milieu relativement et même très salin comportant 1,3, 10 et même jusqu'à 20% en poids de sels, généralement des sels d'alcalins et d'alcalino-terreux, ledit milieu restant pompable après avoir été viscosé.
une bonne tenue de la stabilité et/ou de l'épaississement à température relativement élevée et allant de 50°C par exemple jusqu'à 70°C et même 120°C et au-delà, une température d'environ 70°C étant préférée, et
un pouvoir viscosant efficace à de faibles teneurs en tensio-actifs zwitterioniques viscosants, et
une conjonction et/ou compromis amélioré d'au moins deux de ces propriétés.

La présente invention vise également une méthode de récupération assistée du pétrole d'une formation souterraine dans laquelle on injecte dans ladite formation un fluide aqueux viscoélastique comprenant au moins un tensio-actif zwitterionique viscosant, et l'on conduit ledit fluide à travers cette formation pour déplacer le pétrole de la formation et le récupérer par un endroit différent de celui ou le fluide aqueux viscoélastique a été introduit, caractérisé en ce que ledit fluide présente une quantité d'une base suffisante pour porter son pH à une valeur supérieure à 10, de préférence comprise entre environ 11 et 13..

L'invention consiste plus particulièrement en une méthode de récupération assistée du pétrole d'une formation souterraine comprenant au moins les étapes suivantes :
a) on injecte, par au moins un moyen d'injection en contact avec la formation souterraine contenant le pétrole, un liquide comprenant en mélange au moins :
   i) un milieu aqueux salifié,
   ii) entre 0,05 et 5 % d'un tensio-actif zwitterionique viscosant en solution, ce par quoi le liquide présente une tension de surface inter faciale huile/eau d'environ 10mN/m (milinewton par mètre) ou moins mesurée à température ambiante (25°C) et une viscosité d'environ 3cPs ou plus, mesurée à une température de 80°C et pour un gradient de cisaillement de 10s⁻¹,
   iii) une quantité d'une base suffisante pour porter le pH du liquide à une valeur supérieure à 10, de préférence comprise entre environ 11 et 13; et
   iv) éventuellement un tensio-actif ne conférant pas de propriété viscoélastique au liquide, et
b) on récupère, par au moins un moyen de production situé à un endroit différent de celui ou le polymère a été introduit, ledit liquide comprenant le pétrole.

De manière totalement surprenante et inattendue, la présente invention a permis de montrer que l'ajout d'un composé alcalin à une solution aqueuse d'un tensio-actif zwitterionique permet de maintenir, au cours du vieillissement en température dans des conditions aérobies, la viscosité initiale de la solution. L'augmentation conséquente de pH liée à la présence du composé alcalin, n'entraine pas par ailleurs de diminution significative de viscosité. Outre le fait que la stabilité en température soit maintenue, la présence du composé permet de réagir avec les acides organiques du pétrole brut et former ainsi au sein du réservoir des tensio-actifs secondaires qui permettront de réduire davantage la tension inter faciale entre le liquide injecté et le pétrole.

Le tensio-actif zwitterionique viscosant selon l'invention répond de préférence à la formule générale : 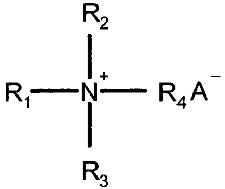 dans laquelle:
A⁻ représente les groupes carboxylate COO- ou sulfonate SO₃⁻,
R₁ représente une partie hydrophobe d'un groupe alkyle, alkoxyalkyle, alkylaminoalkyle et alkylamidoalkyle, dans laquelle les groupe alkyle, identiques ou différents, linéaires ou ramifiés, saturés ou insaturés, contiennent environ de 16 à 26 atomes de carbone. Des exemples de chaines alkyle longues incluent les groupes tetradécyle (myristyle), hexadécyle (cétyle), octadécènyle (oléyle), octadécyle (stéaryle), docosénoique (érucyle), les dérivés du suif et des huiles de coco et de soja. Les groupes R₁ préférés sont les groupes alkylamidopropyle dont le groupe alkyle est choisi parmi les groupes tetradécyle (myristyle), hexadécyle (cétyle), octadécènyle (oléyle), octadécyle (stéaryle), docosénoique (érucyle). Selon une variante préférée, le groupement R₁ contient au moins une insaturation éthylénique.
R₂ and R₃ représentent indépendamment une chaine aliphatique comme par exemple des groupes alkyle, alkényle, arylalkyle, hydroxyalkyle, carboxyalkyle, et hydroxyalkyl-polyoxyalkylène, par exemple hydroxyéthyl-polyoxyéthylène ou hydroxypropyl-polyoxypropylène ayant de 1 à 30 atomes de carbone, de préférence de 1 à 20 atomes de carbone, de façon plus préférée de 1 à 10 atomes de carbone, et de façon encore plus préférée de 1 à 6 atomes de carbone, ledit groupe aliphatique pouvant être linéaire ou ramifié, saturé ou insaturé. Les chaines alkyle préférées sont méthyle, éthyle, Les chaines arylalkyle préférées sont benzyle, et les chaines hydroxyalkyle préférées sont les chaines hydroxyethyle ou hydroxypropyle. Les groupes carboxyalkyle préférés sont acetate et propionate. Les groupes hydroxyalkyl-polyoxyalkylene préférés sont hydroxyéthyl-polyoxyéthylène and hydroxypropyl-polyoxyéthylène.
R₄ est un groupe alkylène ayant de 1 à 4 atomes de carbone. Les préférés sont les groupes méthylène ou éthylène.

Des exemples spécifiques de tensio-actifs viscoélastiques zwitterioniques surfactants incluent les structures suivantes: 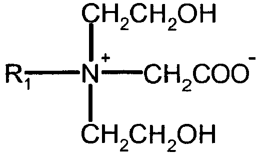 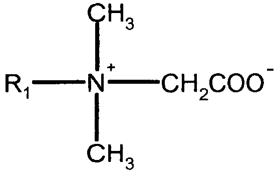 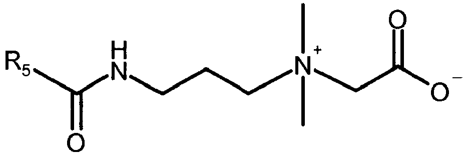 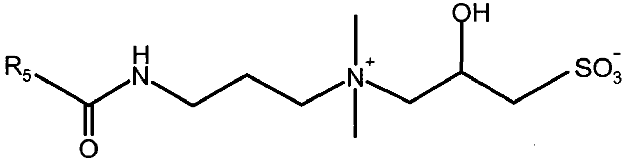 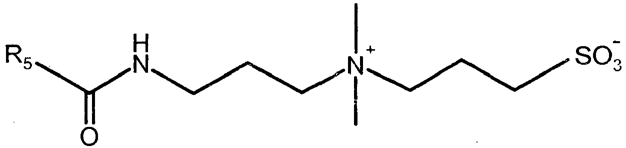 dans lesquelles R₁ est tel que défini ci-dessus et le groupe R₅-C=O, est un groupe alkanoyle en C₁₂-C₂₂ choisi notamment parmi les groupes dodécanoyle, tetradécanoyle (myristoyle), hexadecanoyle (palmitoyle), hexadécénoyle (palmitoléyle), octadécènoyle (oléoyle), octadécanoyle (stéaroyle), docosénoyle (érucoyle).

Des tensio-actifs viscoélastiques zwitterioniques utilisables pour mettre en oeuvre l'invention comprennent ceux décrits dans les brevets des Etats Unis d'Amérique US 6,831,108 B2 et US 2007/0107897, cités comme référence dans la présente description.

Les tensio-actifs viscoélastiques zwitterioniques sont présents dans le liquide aqueux à injecter suivant une quantité efficace pour viscoser ledit liquide de telle sorte qu'une fois dans le réservoir le liquide puisse déplacer le pétrole. Le tensio-actif zwitterionique viscosant selon l'invention est en solution dans le liquide suivant une quantité telle que le liquide présente une tension de surface inter faciale huile/eau d'environ 10 mN/m (milinewton par mètre) ou moins mesurée à température ambiante (25°C) et une viscosité d'environ 3cPs ou plus, mesurée à une température de 80°C et pour un gradient de cisaillement de 10s⁻¹. Cette quantité est généralement comprise entre 0,05 et 5% en poids, de préférence entre 0.1 et 2% en poids.

La base est à une teneur dans le fluide aqueux salé à injecter suffisante pour porter le pH du liquide à une valeur supérieure à 10, de préférence comprise entre environ 11 et 13.

Comme base convenable on peut utiliser toute base de préférence minérale choisie parmi hydroxydes alcalins telle que la soude ou la potasse ou les alcalino-terreux telle l'hydroxyde de calcium. Est également utilisable l'hydroxyde d'ammonium, les carbonates et les métaborates tel que le carbonate de sodium, bicarbonate de sodium ou métaborate de sodium. La quantité de base varie suivant la nature des différents constituants du mélange liquide à injecter, mais elle correspond généralement à une concentration de la base dans ledit liquide comprise entre 0.0001 et 5%, de préférence entre 0.0002 et 1% en poids. La base peut être ajoutée au liquide à injecter juste avant l'emploi ou bien avant lors de la préparation du mélange alcalin. Selon un mode préféré de mise en oeuvre de l'invention, on recommande d'utiliser la soude et le carbonate de sodium.

L'eau peut être de l'eau de mer éventuellement adoucie, une saumure, de l'eau douce ou une eau usée contenant divers métaux et éléments tels du sodium, potassium, calcium, zinc, magnésium, etc......

Le liquide peut éventuellement contenir un tensio-actif ne conférant pas au liquide de propriété viscoélastique.

Ce tensio-actif peut être ajouté au liquide pour modifier le pouvoir viscosant et/ou pour abaisser la tension de surface du liquide et peut être choisi parmi les surfactants anioniques, cationiques, non ioniques, zwitterioniques/amphotères seul ou en combinaison. Quand présent dans le liquide, ce tensio-actif non viscosant est présent à une teneur de 0,5% en poids ou moins, de préférence inférieure à 0,2 et même 0,1% en poids par rapport au poids du liquide.

En fait, grâce à la présence de base dans le liquide injecté, il n'est généralement pas utile d'ajouter un tensio-actif ne conférant pas de propriétés viscoélastiques au liquide.

Le caractère surprenant de l'invention est que la solution de tensio-actif viscoélastique combinée au seul composé alcalin permet à la fois de s'affranchir de l'utilisation de capteurs d'oxygène pour garantir la stabilité chimique dans la durée du fluide pousseur dans les conditions de température de son utilisation, et de se placer dans des conditions idéales de viscosité et d'abaissement de tension inter faciale.

L'exemple suivant illustre l'invention sans en limiter la portée.

### Exemple: Vieillissement en température (80°C) et en condition aérobie.

On utilise un érucylamidopropyl bétaine de formule :

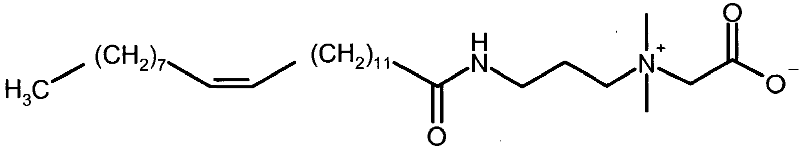

Ce produit est fait en reproduisant le procédé décrit aux colonnes 5 et 6 du brevet US 6831108. Les solutions sont préparées par dilution d'une solution liquide d'érucyl amidopropylbétaine dans un solvant aqueux. Deux solutions ont été testées

### Solutions testées :

### Solution 1 :

érucylamidopropyl bétaine (3000 ppm) dans une solution de soude ([NaOH=10⁻² M]) correspondant à une teneur de 0,04% en poids et conférant à la solution un pH de 12.

### Solution 2 (témoin) :

érucylamidopropyl bétaine (3000 ppm) dans de l'eau déminéralisée (pH entre 6 et 7).

### Conditions de vieillissement :

Les solutions sont préparées et placées dans deux flacons hermétiquement fermés. Ceux-ci sont alors placés dans une étuve à 80°C sans précaution particulière visant à diminuer le taux d'oxygène dissous dans la solution (pas de dégazage ni d'ajout de capteurs d'oxygène).

### Suivi du vieillissement :

La viscosité initiale η₀ des solutions est mesurée avant la mise à l'étuve. Nous mesurons la viscosité de la solution à une température de 80°C avec un cisaillement imposé de 10 s⁻¹.

La même mesure est répétée au cours du vieillissement pour suivre l'évolution de la viscosité η(t). Nous définissons alors la viscosité relative ηᵣ comme le rapport de la viscosité η(t) au bout d'un temps t sur la viscosité initiale η₀.

Les résultats obtenus sont rassemblés dans le tableau 1 ci-après :

**Tableau 1 : Evolution au cours du vieillissement de la viscosité à 10 s⁻¹ mesurée à 80°C.**

| | Solution 1 (NaOH) | | Solution 2 témoin (eau pure) | |
|---|---|---|---|---|
| Temps (jour) | Viscosité (cP) | Viscosité réduite | Viscosité (cP) | Viscosité réduite |
| 0 | 19.9 | 1 | 33.8 | 1 |
| 26 | 13.7 | 0.69 | 12.9 | 0.38 |
| 27 | 12.15 | 0.61 | 10.4 | 0.31 |
| 28 | 11.2 | 0.56 | 3 | 0.08 |
| 32 | 9.5 | 0.49 | | |
| 33 | 13 | 0.66 | | |
| 36 | 11.4 | 0.57 | | |
| 47 | 11.2 | 0.56 | | |
| 97 | 8.4 | 0.422 | | |
| 120 | 8.7 | 0.44 | | |

Il ressort du tableau 1 que le vieillissement à 80°C de la solution préparée avec de l'eau pure comme solvant s'accompagne d'une brusque chute de viscosité aux alentours de 26 jours. Cette chute de viscosité est due à une dégradation chimique de la molécule de tensio-actif zwitterionique.

Par contre, dans le cas de la solution préparée avec de la soude diluée comme solvant, le niveau de viscosité initial est quasiment conservé au bout d'un an.

## Revendications

1. Méthode de récupération assistée du pétrole d'une formation souterraine dans laquelle on injecte dans ladite formation un fluide aqueux viscoélastique comprenant au moins un tensio-actif zwitterionique viscosant, et l'on conduit ledit fluide à travers cette formation pour déplacer le pétrole de la formation et le récupérer par un endroit différent de celui ou le fluide aqueux viscoélastique a été introduit, **caractérisé en ce que** ledit fluide présente une quantité d'une base suffisante pour porter son pH à une valeur supérieure à 10.

2. Méthode selon la revendication 1, **caractérisée en ce qu'**elle comporte au moins les étapes suivantes :
a) on injecte, par au moins un moyen d'injection en contact avec la formation souterraine contenant le pétrole, un liquide comprenant en mélange au moins :
i) un milieu aqueux salifié,
ii) entre 0,05 et 5 % en poids d'un tensio-actif zwitterionique viscosant en solution
iii) une quantité d'une base suffisante pour porter le pH du liquide à une valeur supérieure à 10, et
iv) éventuellement un tensio-actif ne conférant pas de propriété viscoélastique au liquide, et
b)on récupère, par au moins un moyen de production situé à un endroit différent de celui ou le polymère a été introduit, ledit liquide comprenant le pétrole.

3. Méthode selon la revendication 1 ou 2, **caractérisée en ce que** le tensio-actif zwitterionique viscosant est de formule : 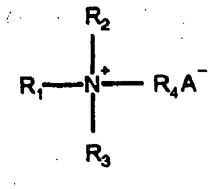 dans laquelle :
A⁻représente les groupes carboxylate COO⁻ ou sulfonate SO3⁻,
R₁ représente une partie hydrophobe d'un groupe alkyle, alkoxyalkyle, alkylaminoalkyle et alkylamidoalkyle, dans laquelle les groupe alkyle, identiques ou différents, linéaires ou ramifiés, saturés ou insaturés, contiennent de 16 à 26 atomes de carbone.
R₂ and R₃ représentent indépendamment une chaine aliphatique ayant de 1 à 30 atomes de carbone, de préférence de 1 à 20 atomes de carbone, de façon plus préférée de 1 à 10 atomes de carbone, et de façon encore plus préférée de 1 à 6 atomes de carbone, ledit groupe aliphatique pouvant être droit ou ramifié, saturé ou insaturé, et
R₄ est un groupe alkylène ayant de 1 à 4 atomes de carbone, de préférence un groupe méthylène ou éthylène.

4. Méthode selon la revendication 3, **caractérisée en ce que** le groupe R₁ comporte au moins une insaturation éthylénique.

5. Méthode selon l'une quelconque des revendications précédentes, **caractérisée en ce que** R₂ and R₃ représentent un groupe alkyle, alkenyle, arylalkyle, hydroxyalkyle, carboxyalkyle, ou hydroxyalkyl-polyoxyalkylene.

6. Méthode selon la revendication 1, **caractérisé en ce que** le tensio-actif zwitterionique viscosant répond à l'une des formules ci-dessous : 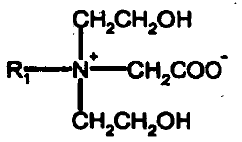 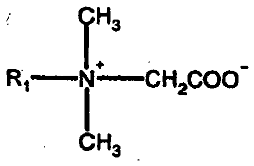 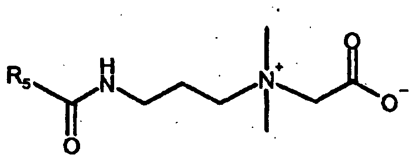 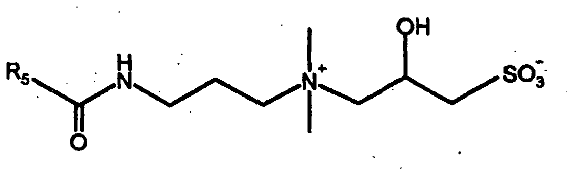 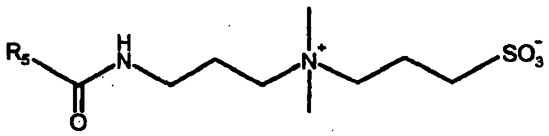 dans lesquelles R₁ représente une partie hydrophobe d'un groupe alkyle, alkoxyalkyle, alkylaminoalkyle et alkylamidoalkyle, dans laquelle les groupe alkyle, identiques ou différents, linéaires ou ramifiés, saturés ou insaturés, contiennent de 16 à 26 atomes de carbone et le groupe R₅ - C=O, est un groupe alkanoyle en C₁₂-C₂₂ choisi notamment parmi les groupes dodécanoyle, tetradécanoyle (myristoyle), hexadecanoyle (palmitoyle), hexadécénoyle (palmitoléyle), octadécènoyle (oléoyle), octadécanoyle (stéaroyle), docosénoyle (érucoyle).

7. Méthode selon l'une quelconque des revendications précédentes, **caractérisée en ce que** la base est choisie parmi les hydroxydes alcalins, les carbonates, les bicarbonates et les métaborates.

8. Méthode selon l'une quelconque des revendications précédentes, **caractérisée en ce que** la base est choisie parmi la soude, la potasse, le carbonate de sodium, le bicarbonate de sodium et le métaborate de sodium.

9. Méthode selon l'une quelconque des revendications précédentes, **caractérisée en ce que** la concentration de la base dans ledit liquide est comprise entre 0.0001 et 5, de préférence entre 0.0002 et 1% en poids.

10. Méthode selon l'une quelconque des revendications précédentes, **caractérisée en ce que** le liquide à injecter contient en outre un tensio-actif non viscoélastique, choisi parmi les surfactants anioniques cationiques non ioniques, zwitterioniques/amphotères présent à une teneur de 0,5% en poids ou moins, de préférence inférieure à 0,1 % en poids par rapport au poids du liquide.

11. Méthode selon l'une quelconque des revendications précédentes, **caractérisé en ce que** le tensio-actif zwitterionique viscosant est présent à une teneur comprise entre 0,05 et 5% en poids, de préférence entre 0.1 et 2% en poids.

12. Méthode selon la revendication 4, **caractérisé en ce que** le tensio-actif zwitterionique viscosant répond à la formule :

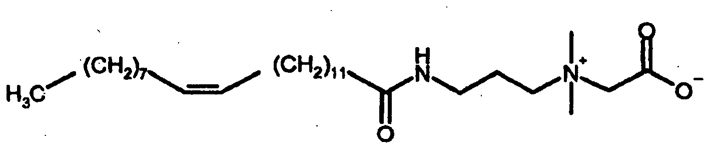

## Patentansprüche

1. Verfahren zur tertiären Erdölgewinnung aus einer unterirdischen Formation, bei dem man in die Formation ein viskoelastisches wässriges Fluid, das mindestens ein viskositätserhöhendes zwitterionisches Tensid umfasst, einpresst und das Fluid durch diese Formation leitet, um das Erdöl aus der Formation zu verdrängen und an einem anderen Ort als dem Ort der Einleitung des viskoelastischen wässrigen Fluids zu gewinnen, **dadurch gekennzeichnet, dass** das Fluid eine Menge einer Base aufweist, die dazu ausreicht, um seinen pH-Wert auf einen Wert von mehr als 10 zu bringen.

2. Verfahren nach Anspruch 1, **dadurch gekennzeichnet, dass** es mindestens die folgenden Schritte umfasst:
a) man presst mit Hilfe mindestens eines Einpressmittels in Kontakt mit der Erdöl enthaltenden unterirdischen Formation eine Flüssigkeit ein, die als Mischung mindestens Folgendes umfasst:
i) ein versalztes wässriges Medium,
ii) zwischen 0,05 und 5 Gew.-% eines viskositätserhöhenden zwitterionischen Tensids in Lösung,
iii) eine Menge einer Base, die dazu ausreicht, um den pH-Wert der Flüssigkeit auf einen Wert von mehr als 10 zu bringen, und
iv) gegebenenfalls ein Tensid, das der Flüssigkeit keine viskoelastische Eigenschaft verleiht, und
b) man gewinnt die Erdöl enthaltende Flüssigkeit mit Hilfe mindestens eines Fördermittels, das sich an einem anderen Ort als dem Ort der Einleitung des Polymers befindet.

3. Verfahren nach Anspruch 1 oder 2, **dadurch gekennzeichnet, dass** das viskositätserhöhende zwitterionische Tensid die folgende Formel aufweist: 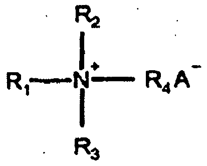 worin:
A⁻ für Carboxylatgruppen COO⁻ oder Sulfonatgruppen SO₃⁻ steht,
R₁ für einen hydrophoben Teil einer Alkyl-, Alkoxyalkyl-, Alkylaminoalkyl- und Alkylamidoalkylgruppe steht, wobei die gleichen oder verschiedenen linearen oder verzweigten und gesättigten oder ungesättigten Alkylgruppen 16 bis 26 Kohlenstoffatome enthalten,
R₂ und R₃ unabhängig voneinander für eine aliphatische Kette mit 1 bis 30 Kohlenstoffatomen, vorzugsweise 1 bis 20 Kohlenstoffatomen, weiter bevorzugt 1 bis 10 Kohlenstoffatomen und noch weiter bevorzugt 1 bis 6 Kohlenstoffatomen stehen, wobei die aliphatische Gruppe gerade oder verzweigt und gesättigt oder ungesättigt sein kann, und
R₄ für eine Alkylengruppe mit 1 bis 4 Kohlenstoffatomen und vorzugsweise eine Methylen- oder Ethylengruppe steht.

4. Verfahren nach Anspruch 3, **dadurch gekennzeichnet, dass** die Gruppe R₁ mindestens eine ethylenische Ungesättigtheit umfasst.

5. Verfahren nach einem der vorhergehenden Ansprüche, **dadurch gekennzeichnet, dass** R₂ und R₃ für eine Alkyl-, Alkenyl-, Arylalkyl-, Hydroxyalkyl-, Carboxyalkyl- oder Hydroxyalkylpolyoxyalkylengruppe stehen.

6. Verfahren nach Anspruch 1, **dadurch gekennzeichnet, dass** das viskositätserhöhende zwitterionische Tensid einer der nachstehenden Formel entspricht: 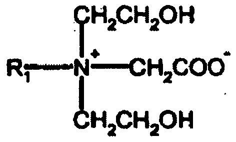 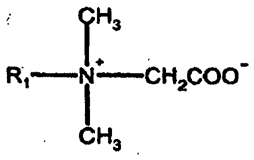 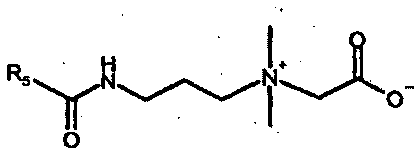 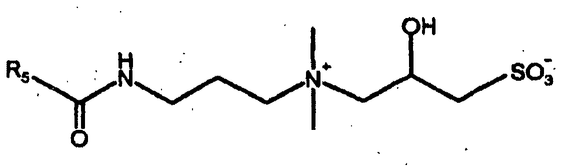 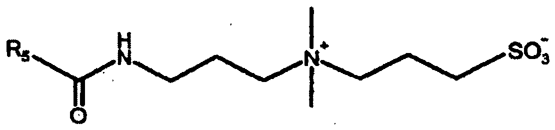 wobei R₁ für einen hydrophoben Teil einer Alkyl-, Alkoxyalkyl-, Alkylaminoalkyl- und Alkylamidoalkylgruppe steht, wobei die gleichen oder verschiedenen linearen oder verzweigten und gesättigten oder ungesättigten Alkylgruppen 16 bis 26 Kohlenstoffatome enthalten, und die Gruppe R₅-C=O eine C₁₂-C₂₂-Alkanoylgruppe ist, die insbesondere aus den Gruppen Dodecanoyl, Tetradecanoyl (Myristoyl), Hexadecanoyl (Palmitoyl), Hexadecenoyl (Palmitoleyl), Octadecanoyl (Oleoyl), Octadecanoyl (Stearoyl) und Docosenoyl (Erucoyl) ausgewählt ist.

7. Verfahren nach einem der vorhergehenden Ansprüche, **dadurch gekennzeichnet, dass** die Base aus Alkalihydroxiden, Carbonaten, Hydrogencarbonaten und Metaboraten ausgewählt ist.

8. Verfahren nach einem der vorhergehenden Ansprüche, **dadurch gekennzeichnet, dass** die Base aus Natriumhydroxid, Kaliumhydroxid, Natriumcarbonat, Natriumhydrogencarbonat und Natriummetaborat ausgewählt ist.

9. Verfahren nach einem der vorhergehenden Ansprüche, **dadurch gekennzeichnet, dass** die Konzentration der Base in der Flüssigkeit zwischen 0,0001 und 5 Gew.-% und vorzugsweise zwischen 0,0002 und 1 Gew.-% liegt.

10. Verfahren nach einem der vorhergehenden Ansprüche, **dadurch gekennzeichnet, dass** die einzupressende Flüssigkeit außerdem ein nicht viskoelastisches Tensid enthält, das aus anionischen, kationischen, nichtionischen und zwitterionischen/amphoteren Tensiden ausgewählt ist und in einem Gehalt von 0,5 Gew.-% oder weniger und vorzugsweise weniger als 0,1 Gew.-%, bezogen auf das Gewicht der Flüssigkeit, vorliegt.

11. Verfahren nach einem der vorhergehenden Ansprüche, **dadurch gekennzeichnet, dass** das viskositätserhöhende zwitterionische Tensid in einem Gehalt zwischen 0,05 und 5 Gew.-% und vorzugsweise zwischen 0,1 und 2 Gew.-% vorliegt.

12. Verfahren nach Anspruch 4, **dadurch gekennzeichnet, dass** das viskositätserhöhende zwitterionische Tensid der folgenden Formel entspricht:

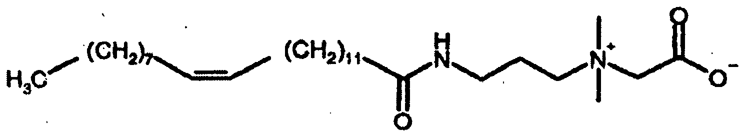

## Claims

1. Method for the enhanced recovery of oil from an underground formation, in which a viscoelastic aqueous fluid comprising at least one viscosifying zwitterionic surfactant is injected into the said formation and the said fluid is conducted through this formation in order to displace the oil from the formation and to recover it via a different point from that where the viscoelastic aqueous fluid was introduced, **characterized in that** the said fluid exhibits an amount of a base sufficient to bring its pH to a value of greater than 10.

2. Method according to Claim 1, **characterized in that** it comprises at least the following stages:
a) a liquid comprising, as a mixture, at least:
i) a salified aqueous medium,
ii) between 0.05 and 5% by weight of a viscosifying zwitterionic surfactant in solution,
iii) an amount of a base sufficient to bring the pH of the liquid to a value of greater than 10, and
iv) optionally a surfactant which does not confer a viscoelastic property on the liquid,
is injected via at least one injection means in contact with the underground formation comprising the oil and
b) the said oil-comprising liquid is recovered via at least one producing means situated at a different point from that where the polymer was introduced.

3. Method according to Claim 1 or 2, **characterized in that** the viscosifying zwitterionic surfactant is of formula: 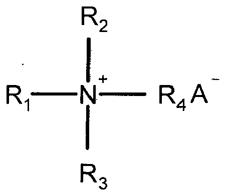 in which:
A⁻ represents the carboxylate COO⁻ or sulphonate SO₃⁻ groups,
R₁ represents a hydrophobic part of an alkyl, alkoxyalkyl, alkylaminoalkyl and alkylamidoalkyl group in which the identical or different, saturated or unsaturated and linear or branched alkyl groups comprise from 16 to 26 carbon atoms,
R₂ and R₃ independently represent an aliphatic chain having from 1 to 30 carbon atoms, preferably from 1 to 20 carbon atoms, more preferably from 1 to 10 carbon atoms and more preferably still from 1 to 6 carbon atoms, it being possible for the said aliphatic group to be straight or branched and saturated or unsaturated, and
R₄ is an alkylene group having from 1 to 4 carbon atoms, preferably a methylene or ethylene group.

4. Method according to Claim 3, **characterized in that** the R₁ group comprises at least one ethylenic unsaturation.

5. Method according to any one of the preceding claims, **characterized in that** R₂ and R₃ represent an alkyl, alkenyl, arylalkyl, hydroxyalkyl, carboxyalkyl or hydroxyalkyl-polyoxyalkylene group.

6. Method according to Claim 1, **characterized in that** the viscosifying zwitterionic surfactant corresponds to one of the following formulae: 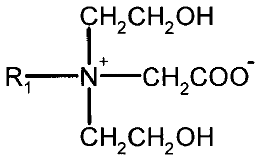 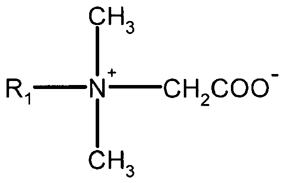 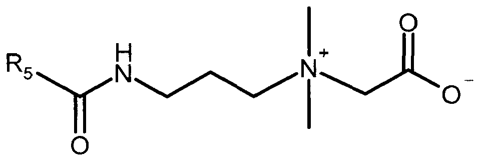 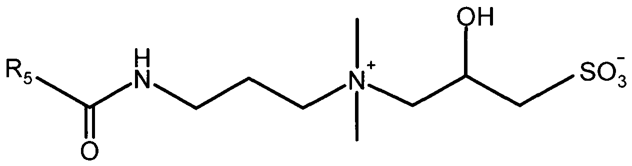 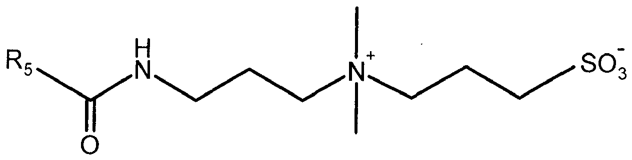 in which R₁ represents a hydrophobic part of an alkyl, alkoxyalkyl, alkylaminoalkyl and alkylamidoalkyl group in which the identical or different, saturated or unsaturated and linear or branched alkyl groups comprise from 16 to 26 carbon atoms and the R₅-C=O group is a C₁₂-C₂₂ alkanoyl group chosen in particular from the dodecanoyl, tetradecanoyl (myristoyl), hexadecanoyl (palmitoyl), hexadecenoyl (palmitoleoyl), octadecenoyl (oleoyl), octadecanoyl (stearoyl) or docosenoyl (erucoyl) groups.

7. Method according to any one of the preceding claims, **characterized in that** the base is chosen from alkali metal hydroxides, from carbonates, from bicarbonates and from metaborates.

8. Method according to any one of the preceding claims, **characterized in that** the base is chosen from sodium hydroxide, potassium hydroxide, sodium carbonate, sodium bicarbonate and sodium metaborate.

9. Method according to any one of the preceding claims, **characterized in that** the concentration of the base in the said liquid is between 0.0001 and 5% by weight, preferably between 0.0002 and 1% by weight.

10. Method according to any one of the preceding claims, **characterized in that** the liquid to be injected additionally comprises a nonviscoelastic surfactant, chosen from anionic, cationic, non-ionic or zwitterionic/amphoteric surfactants, present at a content of 0.5% by weight or less, preferably of less than 0.1% by weight, with respect to the weight of the liquid.

11. Method according to any one of the preceding claims, **characterized in that** the viscosifying zwitterionic surfactant is present at a content of between 0.05 and 5% by weight, preferably between 0.1 and 2% by weight.

12. Method according to Claim 4, **characterized in that** the viscosifying zwitterionic surfactant corresponds to the formula:
